# EUROPÄISCHE PATENTSCHRIFT

(11) **EP 3 374 133 B1**
(45) Veröffentlichungstag und Bekanntmachung des Hinweises auf die Patenterteilung: **17.02.2021**
(21) Anmeldenummer: 16794963.5
(22) Anmeldetag: 02.11.2016
(51) Int. Cl.: B25B 27/10, B25F 5/00, F15B 15/14, F15B 15/20

(54) **IN EINEM ZYLINDER GEFÜHRTER HYDRAULISCH BEAUFSCHLAGTER KOLBEN SOWIE HYDRAULISCHES ARBEITSWERKZEUG**
HYDRAULICALLY ACTUATED PISTON GUIDED IN A CYLINDER, AND HYDRAULIC WORKING TOOL
PISTON SOLLICITÉ PAR VOIE HYDRAULIQUE GUIDÉ DANS UN CYLINDRE ET OUTIL DE TRAVAIL HYDRAULIQUE

(30) Priorität: 10.11.2015 DE 102015119372
(43) Veröffentlichungstag der Anmeldung: 19.09.2018
(73) Patentinhaber: Gustav Klauke GmbH, 42855 Remscheid (DE)
(72) Erfinder: FRENKEN, Egbert, 52525 Heinsberg (DE); LEHR, Andreas, 41468 Neuss (DE)
(74) Vertreter: Müller, Enno
(86) Internationale Anmeldenummer: PCT/EP2016/076365
(87) Internationale Veröffentlichungsnummer: WO 2017/080877

(56) Entgegenhaltungen:
- DE-A1-102006 002 309
- US-A1- 2002 166 446
- US-A1- 2007 214 860

## Beschreibung

### Gebiet der Technik

Die Erfindung betrifft zunächst einen in einem Zylinder geführten hydraulisch beaufschlagten Kolben, wobei der Kolben eine Beaufschlagungsfläche aufweist, die einen zwischen dem Kolben und dem Zylinder gegebenen Beaufschlagungsraum kolbenseitig begrenzt, wobei weiter Hydraulikflüssigkeit zur Bewegung des Kolbens in einer Beaufschlagungsrichtung auf die Beaufschlagungsfläche unter Vergrößerung des Beaufschlagungsraumes einwirken kann.

### Stand der Technik

In einem Zylinder geführte hydraulisch beaufschlagte Kolben sowie hydraulische Arbeitswerkzeuge der in Rede stehenden Art sind bekannt. Hier wird beispielsweise auf die WO 2003/084719 A2 (US 7,412,868 B2) verwiesen. So werden derartige hydraulische Arbeitswerkzeuge mit in einem Zylinder geführten hydraulisch beaufschlagten Kolben beispielsweise zum Schneiden verhältnismäßig dicker Drähte oder zum Stanzen oder Schneiden von beispielsweise Blechen genutzt. Hierbei kann über das Hydraulikmittel, hervorgerufen durch einen Gegendruck von Schneiden oder Stanzbacken, ein Druck von 300 bar und mehr bis hin zu beispielsweise 600 bar oder 800 bar in dem Beaufschlagungsraum erzeugt werden. Der Gegendruck resultiert in einer Gegenkraft, da der Gegendruck jeweils einer konkreten Fläche zugeordnet ist.

Beispielsweise bei einem Schneiden von vergleichsweise dicken Drähten, beispielsweise Drähten mit einem Durchmesser von 5,6 oder 8 mm, die zudem aus einem unter Druck zum Sprödbruch neigenden Stahlwerkstoff bestehen können, kann sich bei Eintritt eines solchen beispielhaften Sprödbruches des zu schneidenden Drahtes ein plötzlicher Abfall der Gegenkraft ergeben, wodurch der Kolben in sehr kurzer Zeit eine sehr starke Beschleunigung erfährt. Hierdurch wiederum können sich in dem Gerät, da in der Regel der Kolben auch sogleich wieder eine entsprechend starke Abbremsung erfährt, sehr erhebliche Reaktionskräfte ergeben . So können bei einer solch unkontrollierten Beschleunigung des im Moment des Sprödbruches unter einem Druck von beispielsweise 600 bar stehenden Kolbens G-Kräfte, beispielsweise G-Kräfte von über 1.000 bis hin zu einigen Tausend erreicht werden. Es können sich so in dem Gerät nach wenigen derartigen Benutzungen starke Abnutzungserscheinungen einstellen.

Aus der US 2002/0166446 A1 ist ein in einem Zylinder geführter hydraulisch beaufschlagter Kolben bekannt, der eine Kolbenstange aufweist mit einer zentralen durchgehenden Öffnung. Auf der Stangenseite des Kolbens sind zwei Auslassöffnungen ausgebildet, eine große und eine kleinere Auslassöffnung. Im Zuge des Verschiebens des Kolbens wird nach einem bestimmten Punkt die größere Austrittsöffnung zugeschiebert und aus der die Kolbenstange umgebenden Hydraulikkammer kann Hydraulikmittel nur noch durch die kleinere Öffnung in die zentrale Durchgangsöffnung eintreten und auf einer Vorderseite des Kolbens austreten. Weiter ist es aus der DE 10 2006 002 309 A1 bekannt, bei einer Kolben-Zylinderanordnung, in welcher der Kolben einen Durchlass aufweist, der ein Einströmen und/oder Ausströmen des Arbeitsmediums in den und/oder aus dem Arbeitsraum auch außerhalb eines Arbeitsvorganges ermöglicht, dann, wenn ein Arbeitsdruck anliegt, einen Verschluss des Durchlasses vorzusehen.

### Zusammenfassung der Erfindung

Ausgehend von dem dargelegten Stand der Technik beschäftigt sich die Erfindung mit der Aufgabenstellung, einen in einem Zylinder geführten hydraulisch beaufschlagten Kolben anzugeben, der bei Wegfall eines Gegendruckes vorteilhaft gedämpft ist. Auch bei Arbeitsvorgängen mit einem plötzlichen Wegfall des Gegendruckes sollen sich keine übermäßigen Abnutzungserscheinungen einstellen.

Diese Aufgabe ist zunächst beim Gegenstand des Anspruches 1 gelöst, wobei darauf abgestellt ist, dass eine mit der Hydraulikflüssigkeit gefüllte Hydraulikkammer ausgebildet ist, die in Bezug auf die Beaufschlagungsfläche über eine in Bezug auf die Beaufschlagungsrichtung rückseitige Fläche auf den Kolben einwirkt, wobei sich ein Volumen der Hydraulikkammer entsprechend der Vergrößerung des Beaufschlagungsraumes verkleinert, unter Verdrängung von Hydraulikflüssigkeit aus der Hydraulikkammer über eine Begrenzungseinrichtung , wobei weiter die Begrenzungseinrichtung mit einer solchen Drosselwirkung ausgebildet ist, dass sich bei Wegfall eines Gegendruckes auf den Kolben gleichsam eine abgeschlossene Hydraulikkammer ergibt und die Hydraulikflüssigkeit in der Hydraulikkammer durch einen vorschnellenden Kolben hochspannbar ist.

Gegenstand der Erfindung ist weiterhin auch ein hydraulisches Arbeitswerkzeug mit einem Arbeitskopf und einem in einem Zylinder geführten hydraulisch beaufschlagten Kolben, wie er vorstehend angegeben ist.

Zufolge der vorgeschlagenen Ausgestaltung ist eine hydraulische Dämpfung des Kolbens (auch) in Beaufschlagungsrichtung gegeben. Die Hydraulikkammer ist bevorzugt mit derselben Hydraulikflüssigkeit gefüllt, mit welcher auch der Beaufschlagungsraum gefüllt ist. Im Zuge der Kolbenverlagerung in der Beaufschlagungsrichtung wird durch in den Beaufschlagungsraum einströmende Hydraulikflüssigkeit - beispielsweise durch Förderung über eine Pumpe - der in Beaufschlagungsrichtung vor der Kolbenfläche ausgebildete Beaufschlagungsraum vergrößert, unter entsprechender linearer Verlagerung des Kolbens in der Beaufschlagungsrichtung. Zugleich erfährt die nachgeschaltete Hydraulikkammer eine Verkleinerung unter sukzessiver Verdrängung der in dieser Hydraulikkammer unter Druck stehenden Hydraulikflüssigkeit. Der in der Hydraulikkammer herrschende Hydraulikdruck steht in direkter Abhängigkeit zu dem in dem Beaufschlagungsraum herrschenden und in Beaufschlagungsrichtung auf den Kolben einwirkenden Hydraulikdruck. Die aus der Hydraulikkammer verdrängte Hydraulikflüssigkeit kann teilweise oder vollständig unter Durchsetzung der Begrenzungseinrichtung in den Beaufschlagungsraum verdrängt werden. Bei einem Rücklauf des Hydraulikkolbens vergrößert sich die Hydraulikkammer wieder, wobei in umgekehrter Richtung, gegebenenfalls auch durch die Begrenzungseinrichtung, wieder Hydraulikflüssigkeit in die Hydraulikkammer einströmt. Im Zuge einer Vergrößerung des Beaufschlagungsraumes durch über einen Pumpvorgang in den Beaufschlagungsraum eingeführte Hydraulikflüssigkeit wird zugleich Hydraulikflüssigkeit, die aus dem Hydraulikraum verdrängt wird, in den Beaufschlagungsraum eingeführt.

Die Begrenzungseinrichtung kann durch einen Spalt oder eine Öffnung belassende zusammenwirkende Flächen des Kolbens und des Zylinders gegeben sein. Sie kann auch durch eine nur in dem Kolben beispielsweise vorgesehene Durchflussöffnung gegeben sein. Bevorzugt erfolgt eine Verdrängung von Hydraulikflüssigkeit aus der Hydraulikkammer in den Beaufschlagungsraum nur über die Begrenzungseinrichtung. Hierzu kann die Begrenzungseinrichtung im einfachsten Fall über eine gezielt vorgesehene Undichtigkeit verfügen. Eine solche Undichtigkeit kann so gewählt sein, dass ein Verdrängen von Hydraulikflüssigkeit aus der Hydraulikkammer in den Beaufschlagungsraum - und gegebenenfalls auch in entgegengesetzter Richtung bei Rücklauf des Kolbens - nur ab einem vorgegebenen Druck beziehungsweise ab einer vorgegebenen Druckdifferenz zwischen der Hydraulikkammer und dem Beaufschlagungsraum in Wirkung tritt.

Kommt es im Zuge einer Arbeitsverlagerung des Kolbens, beispielsweise zum Schneiden eines Drahtes oder zum Stanzen eines Bleches oder dergleichen, zu einem plötzlichen Wegfall der Gegenkraft, beispielsweise zufolge eines Sprödbruches des zu schneidenden oder zu stanzenden Materials, kann der Kolben nicht mehr oder nur noch äußerst geringfügig in Beaufschlagungsrichtung "vorschießen", da der Kolben durch das Hydraulikmittel in der nachgeschalteten Hydraulikkammer gebremst wird. Der Kolben ist insbesondere in der Beaufschlagungsrichtung gedämpft. Wenn auch eine Hydraulikflüssigkeit, insbesondere ein Hydrauliköl, bei üblichen Drücken bis etwa 100 oder 200 bar praktisch inkompressibel ist, ergibt sich bei höheren Drücken doch eine Kompression, die zu einer entsprechend in dem Hydraulikmittel gespeicherten Kraft führt. Auch hierdurch kann sich bei der hier beschriebenen Ausgestaltung eine günstige Abfederungswirkung einer plötzlichen Kolbenbewegung ergeben.

Die Undichtigkeit im Bereich der Begrenzungseinrichtung zwischen dem Kolben und dem Zylinder kann schon allein durch eine geeignete Spielpassung gegeben sein. Es kann ergänzend oder alternativ auch in einem Teilbereich einer Umfangsfläche des Kolbens, die mit einer Innenfläche des Zylinders zusammenwirkt, eine Abflachung vorgesehen sein. Beispielsweise kann diese Abflachung in Bezug auf einen Kreisquerschnitt eines Kolbenflansches vorgesehen sein, bei durchgehender Kreisfläche des Zylinders. Hierdurch ergibt sich eine entsprechende Durchströmöffnung.

Es können weiter über den Umfang des Kolbens (im Bereich beziehungsweise zur Bildung der Begrenzungseinrichtung) eine oder mehrere Zonen mit gezielter Undichtigkeit vorgesehen sein. Neben diesen Zonen können im Bereich beziehungsweise zur Bildung der Begrenzungseinrichtung auch in üblicher Weise abgedichtete Zonen ausgebildet sein.

Der Kolben beziehungsweise ein gegebenenfalls mit der Innenfläche des Zylinders zusammenwirkender Kolbenflansch oder Kolbenkopf ist in einer bevorzugten Ausgestaltung über den gesamt möglichen Verlagerungsbereich des Kolbens beidseitig, d.h. in Beaufschlagungsrichtung vor und hinter dem Kolben beziehungsweise Kolbenkopf von aus bevorzugt einem gemeinsamen Vorrat stammender Hydraulikflüssigkeit beaufschlagt.

Zufolge der vorgeschlagenen hydraulischen Dämpfung unter Ausbildung einer Hydraulikkammer nach der Begrenzungseinrichtung sind die bei hydraulischen Arbeitswerkzeugen ohne eine solche Vorrichtung bekannten zeitlich nachgelagerten hohen Druckwerte bei einer plötzlichen Entlastung demgegenüber so wesentlich reduziert, dass die Lebensdauer des Arbeitswerkzeuges bei einem Einsatz unter den genannten kritischen Bedingungen deutlich erhöht ist. Es kommt nicht zu übermäßigen Abnutzungserscheinungen.

Die Hydraulikkammer ist bevorzugt in jeder Stellung immer praktisch vollständig mit Hydraulikflüssigkeit gefüllt. Die Hydraulikkammer kann insbesondere eine in Bezug auf eine Krafteinwirkung auf den Kolben in oder entgegen der Bewegungsrichtung kleinere wirksame Fläche aufweisen als die Beaufschlagungsfläche. Abgeleitet aus einem den Beaufschlagungsraum zunehmend mit Hydraulikflüssigkeit füllenden Pumpvorgang wird zugleich zusätzlich Hydraulikflüssigkeit aus dem Hydraulikraum in den Beaufschlagungsraum verdrängt. Hierbei herrscht bei unterschiedlichen Flächen, wie bevorzugt, aufgrund der hydraulisch wirksamen Flächenverhältnisse, bei einem Verfahren des Kolbens zur Durchführung eines Arbeitsvorganges, in der in der Hydraulikkammer befindlichen Hydraulikflüssigkeit, jedenfalls solange keine nennenswerte Gegenkraft ansteht, stets ein höherer Druck als in dem Beaufschlagungsraum. Der Druck in der Hydraulikkammer ist jedenfalls um einen in der Begrenzungseinrichtung sich einstellenden Druckabfall - gesehen von der Hydraulikkammer in Richtung des Beaufschlagungsraums - höher als der Druck in dem Beaufschlagungsraum.

Alternativ kann der Hydraulikraum auch über eine Begrenzungseinrichtung Hydraulikflüssigkeit beim Vorfahren des Kolbens in einen gesonderten Tank oder unmittelbar in einen gemeinsamen Tank, aus dem auch die Hydraulikflüssigkeit in den Beaufschlagungsraum gefördert wird, entleeren. Bei einer solchen Ausgestaltung kann sich (unabhängig von einem Flächenverhältnis zwischen wirksamer Fläche der Hydraulikkammer und der Beaufschlagungsfläche) ein geringerer Druck in der Hydraulikkammer - bezogen auf den in dem Beaufschlagungsraum herrschenden Druck -, auch bis zum Zeitpunkt des Wegfalls der Gegenkraft, ergeben.

Wesentlich ist jedenfalls, dass die Begrenzungseinrichtung eine so hohe Drosselwirkung erzeugt, dass bei einem plötzlichen Wegfall der Gegenkraft in diesem Augenblick praktisch kein relevanter Durchfluss durch die Begrenzungseinrichtung gegeben sein kann. Hierdurch wird eine durch die Trägheitskraft des Kolbens aufgrund des Wegfalls verursachte Druckerhöhung in diesem Augenblick praktisch in einem - bezogen auf diesen Augenblick - konstanten Volumen der Hydraulikkammer aufgefangen, durch eine erzeugte Hochspannung, das heißt eine Druckerhöhung, der Hydraulikflüssigkeit in der Hydraulikkammer.

Es sind bevorzugt keine besonderen Vorkehrungen an der Kombination aus dem Kolben und dem Zylinder beziehungsweise an dem hydraulischen Arbeitswerkzeug vorgesehen, die ein Liefern von Hydraulikflüssigkeit in den Hydraulikraum zur Durchführung eines Arbeitsvorganges des Kolbens in einer Gegenrichtung zu der Beaufschlagungsrichtung ermöglichen würden. Die Füllung der Hydraulikkammer ist bevorzugt abgeleitet aus einer Entleerung des Beaufschlagungsraumes beziehungsweise einem Zurückfahren des Kolbens in seine Ausgangsstellung.

In einer möglichen Ausgestaltung ist vorgesehen, dass die Hydraulikkammer ein Füllventil aufweist, das bei einer der Beaufschlagungsrichtung entgegengesetzten Bewegung des Kolbens geöffnet ist. Das Füllventil kann in einer bevorzugten Ausgestaltung selbsttätig, druckabhängig öffnen. Auch ist diesbezüglich eine manuelle oder semi-manuell durch den Benutzer herbeiführbare Öffnung des Ventils möglich.

Über das geöffnete Füllventil kann im Zuge einer Kolben-Rückverlagerung in Richtung auf die Ausgangsstellung Hydraulikflüssigkeit aus dem Beaufschlagungsraum in die Hydraulikkammer gedrängt werden. Die bei vollständig rückgefahrenem Kolben in der Hydraulikkammer befindliche Teilmenge der Hydraulikflüssigkeit kann so ein Teil der zufolge der Kolben-Rückverlagerung aus dem Beaufschlagungsraum verdrängten Menge an Hydraulikflüssigkeit sein. Bevorzugt wird der darüber hinaus gehende Anteil an Hydraulikflüssigkeit, der nicht in die Hydraulikkammer vorgedrängt wurde, in bekannter Weise in einen Vorratstank des hydraulisch arbeitenden Werkzeuges verdrängt.

Die Hydraulikkammer kann aber auch aus einem gesonderten Tank, etwa durch Aussaugen, im Zuge des Zurücklaufens des Kolbens wieder gefüllt werden. Zu dem gesonderten Tank kann auch ein gesondertes Rückschlagventil führen, das bei Durchführung eines Arbeitsvorganges geschlossen ist, bei Zurücklaufen des Kolbens jedoch eine günstige Befüllung der Hydraulikkammer aus dem gesonderten Tank, gegebenenfalls auch aus dem gemeinsamen Tank, ermöglicht. Eine solche Befüllung kann auch durch einen gewissen Druck unterstützt sein, beispielsweise einen elastischen Druck, der auf den gesonderten Tank beziehungsweise dessen Inhalt wirkt.

Wenn die Hydraulikflüssigkeit aus der Hydraulikkammer bei einem Verfahren des Kolbens in der Beaufschlagungsrichtung nicht geliefert wird, ist entsprechend bevorzugt vorgesehen, dass der Kolben in üblicher Weise gegenüber dem Zylinder abgedichtet ist, beispielsweise über gesonderte O-Ringe oder metallische Kolbenringe, so dass gegenüber einer üblichen Anordnung eines Kolbens in einem Zylinder bei einem so ausgebildeten Arbeitswerkzeug kein Unterschied gegeben ist.

Bei dem Ventil kann es sich um ein Rückschlagventil, beispielsweise ein Kugelsitzventil handeln.

Wie schon allgemeiner ausgeführt, können die in der Beaufschlagungsrichtung wirksamen Flächen der Hydraulikkammer und des Beaufschlagungsraumes in ihrem Verhältnis so gewählt sein, dass sich bei einer Bewegung des Kolbens in der Beaufschlagungsrichtung in der Hydraulikkammer, solange kein relevanter Gegendruck herrscht, also beispielsweise bis zu einem Gegendruck von einigen bar, beispielsweise bis zu 10 oder 20 bar, ein höherer Druck, beispielsweise ein 1,5-, 2- oder 3-fach bis hin zu 5-fach oder mehr höherer Druck als in dem Beaufschlagungsraum einstellt.

Die vor- und nachstehend genannte Gegenkraft ist diejenige Kraft, welche über den Kolben mit beginnender und sich fortsetzender Werkstückberührung und ggf. Eindringen in das Werkstück, aufgrund des Widerstandes des Werkstückes, - auch - aufgebracht werden muss. Es handelt sich so gesehen um die von dem Werkstück ausgehende Gegenkraft.

Im Zuge eines Aufbaus der Gegenkraft bei Durchführung eines beispielsweise Schneid- oder Stanzvorgangs, nähern sich die Drücke in dem Beaufschlagungsraum und der Hydraulikkammer in ihrem Verhältnis aneinander an. Soweit die Hydraulikflüssigkeit aus der Hydraulikkammer über die Begrenzungseinrichtung nur oder praktisch nur in den Beaufschlagungsraum verdrängt wird, wird auch bis zu dem Augenblick des plötzlichen Abfalls der Gegenkraft der Druck in der Hydraulikkammer noch um den sich einstellenden Differenzdruck in der Begrenzungseinrichtung höher sein. Bei einem plötzlichen Wegfall der Gegenkraft stellt sich in der Hydraulikkammer in der Beaufschlagungsrichtung eine sehr hohe Kraftbelastung durch die Trägheitskraft des von der Gegenkraft befreiten Kolbens ein. Dies führt in der Hydraulikkammer zu einer sehr hochgespannten Hydraulikflüssigkeit, die sich unmittelbar danach unter Wirkung auf den Kolben entgegen der Beaufschlagungsrichtung entspannen kann. Die Hydraulikflüssigkeit in der Hydraulikkammer arbeitet bei der Entspannung also in einer Gegenrichtung zu der in diesem Augenblick noch gegebenen Bewegungstendenz des Kolbens.

Die sich durch die Begrenzungseinrichtung ergebende Druckdifferenz, die also durch eine entsprechende Drosselwirkung in der Begrenzungseinrichtung entsteht, kann 20 bis 70 bar, weiter beispielsweise 50 bar betragen. Wenn zudem das Verhältnis der wirksamen Flächen 2:1 ist, stellt sich in einem Beispielsfall bei einem Vorlaufen des Kolbens, bei dem noch keine wesentliche Gegenkraft herrscht, in dem Beaufschlagungsraum ein Druck von wenigen bar, beispielsweise 2 bis 5 bar über dem durch die Begrenzungseinrichtung verursachten Druck ein, im Falle von 20 bar also bspw. 22 - 25 bar, im Falle von 70 bar also bspw. 72 - 75 bar, während sich in der Hydraulikkammer ein Druck von ca. 40 bar (bei 20 bar Druckabfall in der Begrenzungseinrichtung) oder auch ca. 140 bar, bei 70 bar Druckabfall in der Begrenzungseinrichtung, einstellt. Wenn sich im Zuge eines Arbeitsvorganges dann eine Berührung zu einem Werkstück ergibt, sich also eine relevante Gegenkraft, gegebenenfalls auch sehr kurzzeitig, aufbaut, kann der Druck in dem Beaufschlagungsraum beispielsweise bis auf 300 bar ansteigen, während er in der Hydraulikkammer, bei den unterstellten 50 bar Druckabfall in der Begrenzungseinrichtung, auf in diesem Beispiel ca. 350 bar ansteigen würde. Aufgrund der unterschiedlichen Flächen ergibt sich eine entsprechende Kraftdifferenz, welche Kraft dann als Arbeitskraft, etwa zum Schneiden, zur Verfügung steht. Die Gegenkraft kann beispielsweise bei einem Druck im Beaufschlagungsraum von 500 bar plötzlich wegfallen, wobei es dann aufgrund einer Entspannung zu einer entsprechenden Beschleunigung des Kolbens kommt. Durch den so beaufschlagten Kolben beziehungsweise seine Beschleunigungstendenz kann sich der Druck in der Hydraulikkammer sehr plötzlich wesentlich erhöhen, beispielsweise in dem genannten Beispiel auf 700 bar oder mehr. Hiermit ergibt sich dann in einem solchen Zeitraum, der hier praktisch als Zeitpunkt zu bezeichnen ist, eine Druckdifferenz von 300 bar oder mehr zwischen der Hydraulikkammer und dem Beaufschlagungsraum. Unmittelbar danach nehmen die Drücke aber in beiden Räumen, im Beaufschlagungsraum und der Hydraulikkammer, sehr schnell bis auf nahezu Null beziehungsweise auf Null ab, wenn es zum Stillstand des Kolbens kommt. Die genannten Vorgänge spielen sich in sehr kurzen Zeiträumen, in Millisekunden, ab.

Die vor- und nachstehend angegebenen Bereiche beziehungsweise Mehrfachbereiche schließen hinsichtlich der Offenbarung auch sämtliche Zwischenwerte ein, insbesondere in 1/10-Schritten der jeweiligen Dimension, gegebenenfalls also auch dimensionslos. Beispielsweise beinhaltet die Angabe bis zu einem 5-Fachen auch die Offenbarung von bis zu einem 4,9-Fachen. Diese Offenbarung kann einerseits zur Einengung einer genannten Bereichsgrenze von unten und/oder oben, alternativ oder ergänzend aber zur Offenbarung eines oder mehrerer singulärer Werte aus einem jeweilig angegebenen Bereich dienen.

### Kurze Beschreibung der Zeichnungen

Nachstehend ist die Erfindung anhand der beigefügten Zeichnung erläutert, die aber lediglich ein Ausführungsbeispiel darstellt. Auf der Zeichnung zeigt:
- Fig. 1: ein hydraulisches Arbeitswerkzeug mit einem in einem Zylinder geführten hydraulisch beaufschlagbaren Kolben in Ansicht;
- Fig. 2: das Arbeitswerkzeug in Seitenansicht;
- Fig. 3: den Schnitt gemäß der Linie III-III in Figur 1;
- Fig. 4: die Herausvergrößerung des Bereiches IV in Figur 3, eine Kolben-Grundstellung betreffend;
- Fig. 5: den Schnitt gemäß der Linie V-V in Figur 4;
- Fig. 6: die Herausvergrößerung des Bereiches VI in Figur 4;
- Fig. 7: eine der Figur 4 entsprechende Darstellung, bei Verlagerung des Kolbens in Beaufschlagungsrichtung;
- Fig. 8: eine weitere der Figur 4 entsprechende Darstellung, eine Zwischenstellung im Zuge des Kolbenrücklaufes betreffend;
- Fig. 9: eine Darstellung gemäß Figur 4 mit einer Entleerbarkeit der Hydraulikkammer in ein gesondertes Reservoir;
- Fig. 10: eine Darstellung der Ausführungsform der Figur 9 bei vorgefahrenem Kolben;

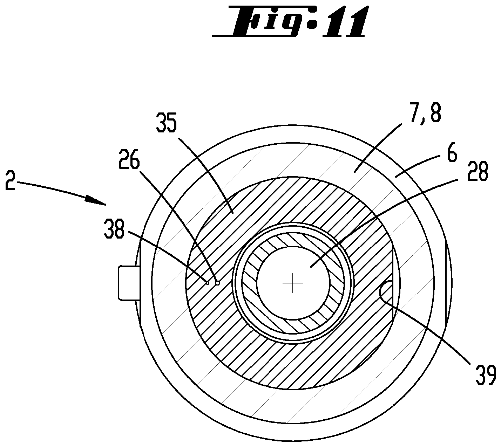

- Fig. 11: eine alternative Ausbildung einer Undichtigkeit zwischen dem Kolben und einer Zylinderinnenfläche.

### Beschreibung der Ausführungsformen

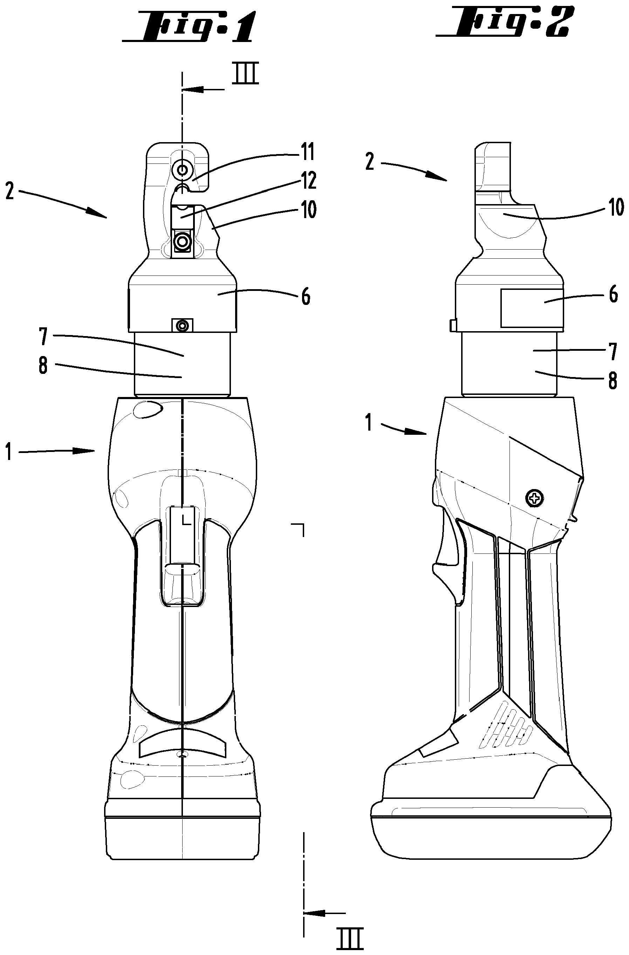

Dargestellt und beschrieben ist, zunächst mit Bezug zu Figur 1, ein zur Einhandbedienung geeignetes hydraulisches, insbesondere elektrohydraulisches Arbeitswerkzeug 1 zur Betätigung eines Arbeitskopfes 2. Der Arbeitskopf 2 kann, wie dargestellt, als auswechselbar an dem Arbeitswerkzeug 1 halterbarer Kopf ausgebildet sein. Es ist genauso ein nicht lösbar mit dem Werkzeug verbundener Kopf möglich. In dem dargestellten Ausführungsbeispiel ist der Arbeitskopf 2 als Schneidkopf ausgebildet. Es können aber an dem Arbeitswerkzeug 1 auch Arbeitsköpfe 2 in Form von beispielsweise Stanz- oder Pressköpfen angeordnet werden.

Der Arbeitskopf 2 ist zur hydraulischen Versorgung an das Arbeitswerkzeug 1 anschließbar.

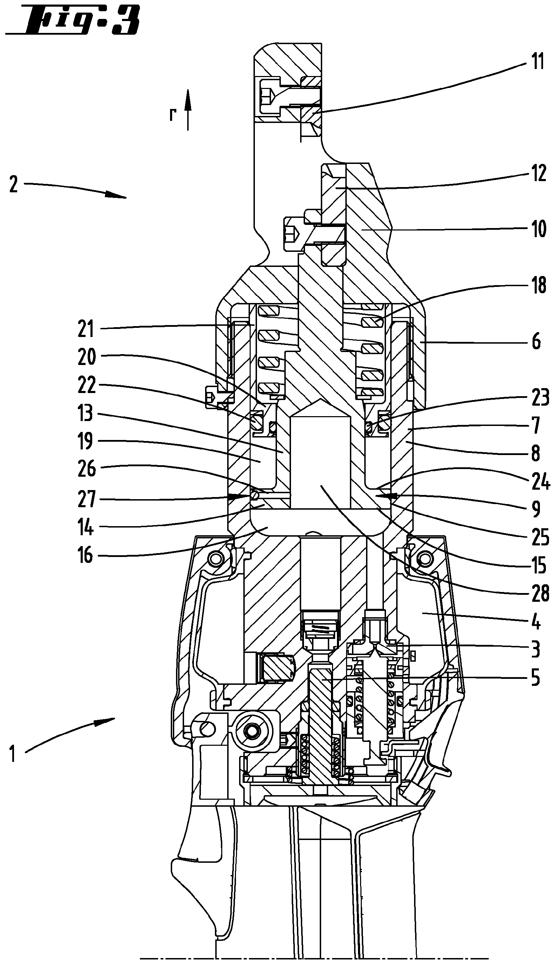

Bei dem hydraulischen Arbeitswerkzeug 1 kann es sich, wie auch bevorzugt, um ein Grundgerät handeln, wie es auch in der eingangs zitierten WO 2003/084719 A2 (US 7,412,868 B2) dargestellt und beschrieben ist. Mit Bezug zu der Darstellung in Figur 3 ist in dem oberen Bereich des Arbeitswerkzeuges 1 der Zusammenhang mit dem in der genannten WO-Schrift beschriebenen Gegenstand etwa im Hinblick auf ein Rücklaufventil 3, einen Tank 4 und einen Pumpstößel 5 zu erkennen. Im Übrigen wird zur weiteren Erläuterung des bevorzugt hier eingesetzten hydraulischen Arbeitswerkzeuges 1 auf die genannte WO- beziehungsweise US-Schrift vollinhaltlich Bezug genommen, auch zu dem Zwecke, Merkmale, die in der WO- beziehungsweise US-Schrift hinsichtlich des Aufbaus des Arbeitswerkzeuges beschrieben sind, in Ansprüche vorliegender Anmeldung mit aufzunehmen.

Der Arbeitskopf 2 ist über einen Flansch 6 mechanisch, wie auch hydraulisch mit dem Arbeitswerkzeug 1 verbunden. Der Flansch 6 ist hierzu zunächst zur Schraubverbindung mit einem Hals 7 des Arbeitswerkzeuges 1 ausgebildet. Der Hals 7 formt zugleich einen Zylinder 8 für einen Kolben 9 des Arbeitskopfes 2 aus. Der Zusammenwirkungsbereich von Arbeitswerkzeug 1 und Arbeitskopf 2 ist im Allgemeinen rotationssymmetrisch zu einer Achse x ausgebildet.

Der Flansch 6 des Arbeitskopfes 2 umfasst den Hals 7 und geht arbeitskopfseitig des Halses 7 in einen bügelförmig ausgebildeten Halter 10 über. An diesem Halter 10 ist in dem dargestellten Ausführungsbeispiel eine Festschneide 11 angeordnet.

Eine weitere bewegliche Schneide 12 ist in Richtung auf die Festschneide 11 vorgelagert angeordnet. Die Schneide 12 ist bevorzugt entlang der Achse x verlagerbar. Die bewegliche Schneide 12 ist mit dem Kolben 9 gekoppelt, der entsprechend auch Bestandteil des Arbeitskopfes 2 ist.

Der Kolben 9 und hierüber die Schneide 12 sind in dem Arbeitskopf 2 linear, in Nutzungsstellung entlang der Achse x, verlagerbar.

Der Kolben 9 besitzt einen Kolbenschaft 13 mit einem dem Arbeitsbereich beziehungsweise dem Anschlussbereich der Schneide 12 an dem Kolbenschaft 13 abgewandten tellerförmigen Kolbenflansch oder Kolbenkopf 14.

Der Durchmesser des Kolbenkopfes 14 ist angepasst an den Innendurchmesser des aufnehmenden Zylinders 8. Die zusammenwirkenden Flächen von Kolben 9 beziehungsweise Kolbenkopf 14 und Zylinder 8 bilden eine Begrenzungseinrichtung 25.

Der Kolbenschaft-Durchmesser ist gegenüber dem Außendurchmesser des Kolbenkopfes 14 und somit gegenüber dem Innendurchmesser des Zylinders 8 verringert, entspricht beispielsweise dem 0,5- bis 0,7-Fachen des Kolbenkopf-Durchmessers. Es ergibt sich entsprechend den Kolbenschaft 13 umgebend ein Ringraum.

Diesem Ringraum abgewandt formt der Kolbenkopf 14 eine Beaufschlagungsfläche 15 für die im Betrieb des Arbeitswerkzeuges 1 in den vor der Beaufschlagungsfläche 15 zwischen dem Zylinder 8 und dem Kolben 9 gebildeten Beaufschlagungsraum 16 geförderte Hydraulikflüssigkeit 17.

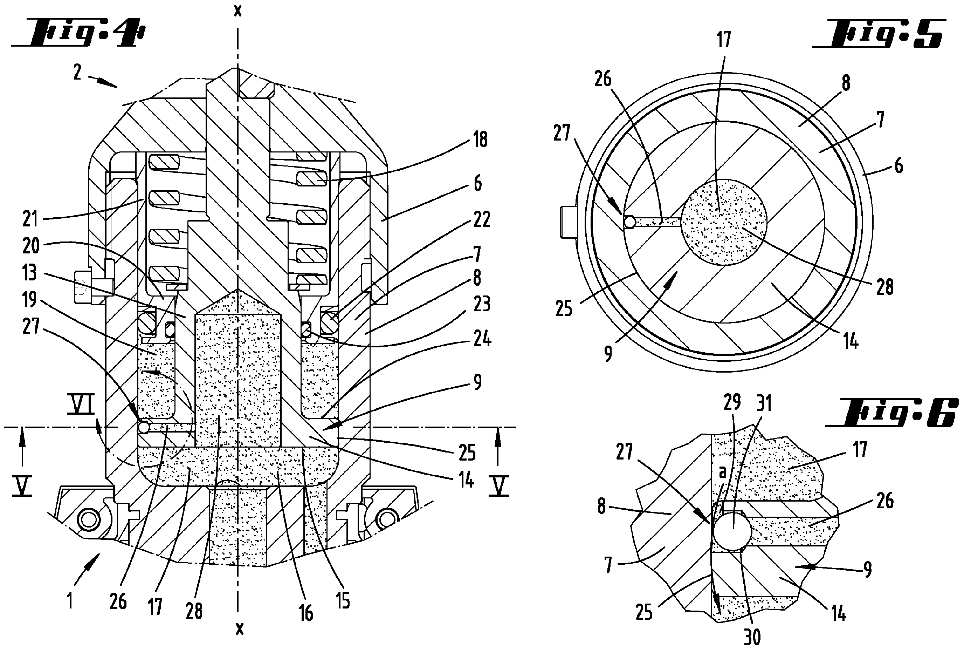

Der Kolben 9 ist entgegen einer zufolge Druckerhöhung in dem Beaufschlagungsraum 16 gegebenen Beaufschlagungsrichtung r in Richtung auf eine Grundstellung belastet, wie beispielsweise in Figur 4 dargestellt. Hierzu ist eine Feder 18 vorgesehen, insbesondere eine Zylinder-Druckfeder. Die Feder 18 stützt sich einerends im Bereich des Halters 10 an dem Arbeitskopf 2 ab und wirkt anderends auf den Kolbenschaft 13 ein.

Der sich radial zwischen Kolbenschaft 13 und Zylinder 8 ausformende Ringraum bildet eine Hydraulikkammer 19. Diese ist entgegen der Beaufschlagungsrichtung r im Wesentlichen durch den Kolbenkopf 14 und in Beaufschlagungsrichtung r durch eine relativ zu dem Zylinder 8 feststehende Fläche begrenzt. Bei dem dargestellten Ausführungsbeispiel ist die feststehende Fläche durch einen abdichtend gegen die Innenfläche des Zylinders 8 wirkenden Kragen 20 einer an dem Arbeitskopf 2 gehalterten Hülse 21 gebildet. Die feststehende Fläche könnte auch ein integraler Teil des Zylinders sein. Die Hülse 21 kann die Feder 18 umfassen und liegt in der dargestellten Anschlussstellung des Arbeitskopfes 2 an dem Arbeitswerkzeug 1 bevorzugt wandungsinnenseitig an dem Zylinder 8 an.

Im Bereich des Kragens 20 ist umlaufend radial außen eine Dichtung 22 aufgenommen, zur abdichtenden Wirkung gegen die Zylinderinnenfläche. Auch radial innen weist der Kragen 20 eine Dichtung 23 auf zur Zusammenwirkung mit der zylinderförmigen Außenfläche des Kolbenschaftes 13.

Die Hydraulikkammer 19 ist so in Beaufschlagungsrichtung r betrachtet im Bereich des Kragens 20 abgedichtet. In Richtung des Kolbenkopfes 14 hingegen ist bevorzugt keine oder zumindest keine vollständig umlaufende Dichtung vorgesehen. Vielmehr ist zwischen dem Kolbenkopf 14 und der Innenfläche des Zylinders 8 beispielsweise eine Spielpassung gegeben. Es ist so eine bewusste Undichtigkeit zwischen dem Kolben 9 und dem Zylinder 8, weiter zwischen der Hydraulikkammer 19 und dem Beaufschlagungsraum 16 gegeben.

Die Hydraulikkammer 19 ist mit derselben Hydraulikflüssigkeit 17 gefüllt wie der Beaufschlagungsraum 16. Ausgehend von einer Kolben-Grundstellung gemäß Figur 4 beziehungsweise einer Arbeitskopf-Grundstellung gemäß den Darstellungen in den Figuren 1 bis 3 wird mit einer Betätigung der in dem Arbeitswerkzeug 1 vorgesehenen, bevorzugt elektrisch betriebenen Pumpe Hydraulikflüssigkeit 17 in den Beaufschlagungsraum 16 eingepumpt. Dies führt zu einer Linearverlagerung des Kolbens 9 relativ zu dem Zylinder 8 innerhalb des Zylinders 8 in Beaufschlagungsrichtung. Die Bewegung erfolgt entgegen der Krafteinwirkung der Feder 18 welche insbesondere zur Rückstellung des Systems in die Grundstellung dient.

Aufgrund des Verhältnisses der wirksamen Flächen von Beaufschlagungsraum 16 (Beaufschlagungsfläche 15) und Hydraulikkammer 19 (Ringfläche 24 des Kolbenkopfes 14) stellt sich im Zuge des Vorfahrens des Kolbens 9 durch Einpumpen von Hydraulikflüssigkeit in den Beaufschlagungsraum 16 in der Hydraulikkammer 19 ein gegenüber dem Druck in dem Beaufschlagungsraum 16 erhöhter Druck ein. Dieser Hydraulikkammer-Druck kann jedenfalls solange, wie kein nennenswerter Gegendruck herrscht, beispielsweise bis zu einem 5-Fachen, gegebenenfalls auch darüber hinaus, des Beaufschlagungsraum-Druckes entsprechen.

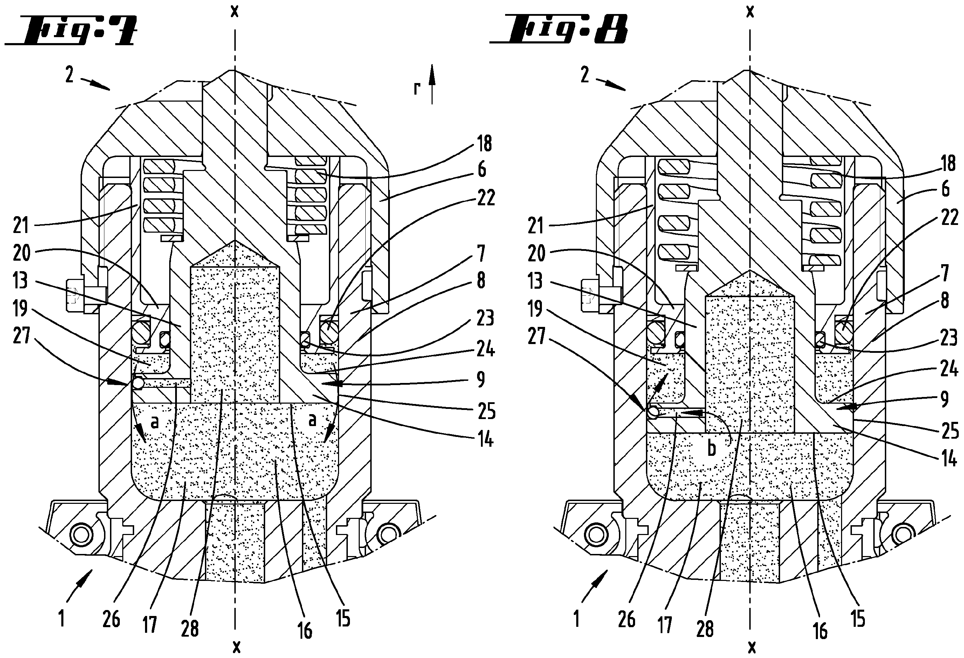

Die bevorzugt im Bereich der Zusammenwirkung des Kolbens 9 beziehungsweise des Kolbenkopfes 14 und einer Innenwandung des Zylinders 8 gegebene Begrenzungseinrichtung 25 weist eine derartige Undichtigkeit auf, dass (auch) zufolge der gegebenen Druckdifferenz bei Bewegung des Kolbens 9 in Beaufschlagungsrichtung r Hydraulikflüssigkeit 17 aus der Hydraulikkammer 19 in den Beaufschlagungsraum 16 verdrängt werden kann (siehe Pfeile a in Figur 7). Entsprechend geht eine volumenmäßige Vergrößerung des Beaufschlagungsraumes 16 und damit eine Kolbenverlagerung in Beaufschlagungsrichtung r einher mit einer volumenmäßigen Verringerung der Hydraulickammer 19.

In einer bevorzugten Ausgestaltung kann die Größe der Hydraulickammer 19, insbesondere deren axiales Maß in Erstreckungsrichtung der Achse x, so gewählt sein, dass in einer vollständig vorverlagerten Stellung des Kolbens 9 (die auch anschlagbegrenzt sein kann) die Hydraulikkammer 19 noch weiterhin mit einer Restmenge an Hydraulikflüssigkeit 17 gefüllt ist.

Die Hydraulikflüssigkeit-Teilmenge in der Hydraulikkammer 19 ergibt bei einer plötzlichen Vorverlagerung des Kolbens 9, d.h. in dem dargestellten Ausführungsbeispiel im Zuge eines Schneidvorganges, eine Dämpfung hinsichtlich einer Bewegung des Kolbens 9. Insbesondere gegen Ende des Ausfahrvorganges des Kolbens 9 oder in einem Zustand einer hohen wirkenden Gegenkraft und einem entsprechend hohen Druck in dem Beaufschlagungsraum, der oftmals deutlich vor einem Ende des Ausfahrvorganges gegeben ist, stellt sich bei dem dargestellten Ausführungsbeispiel aufgrund der herrschenden Gegenkraft in der Hydraulikkammer 19 ein etwa gleicher Druck ein wie in dem Beaufschlagungsraum 16, erhöht um etwa die Druckdifferenz, die sich durch die Begrenzungseinrichtung ergibt. Bricht in einer solchen Stellung, in welcher 500 bar oder mehr, beispielsweise 600 oder 700 bar auf den Kolben 9 wirken, der zu schneidende Gegenstand (Sprödbruch), kommt es zu einer plötzlichen Entlastung des Systems, woraufhin der Kolben 9 geneigt ist, in Beaufschlagungsrichtung r vorzuschießen. Dies ist durch den Hydraulikpuffer in der Hydraulikkammer 19 vermieden. Der Kolben 9 wird durch das Hydraulikmittel in der Hydraulikkammer 19 wirksam auf sehr kurzem Weg und in sehr kurzer Zeit, in Bruchteilen einer Sekunde, gebremst. Hierbei kommt es zu einer kurzfristig sehr deutlichen, relevanten weiteren Druckerhöhung in der Hydraulikkammer 19. Die Hydraulikflüssigkeit in der Hydraulikkammer 19 kann hierdurch auch komprimiert werden und somit gleichsam elastisch wie eine Feder Kraft aufnehmen, die unmittelbar danach den Kolben in Gegenrichtung zu drücken sucht.

Der Rücklaufvorgang des Kolbens 9 kann automatisch, ventilgesteuert durch das Arbeitswerkzeug 1 ausgelöst werden, alternativ durch manuellen Eingriff. Die Rückverlagerung wird erreicht zufolge Einwirkung der Feder 18 in Richtung entgegen der Beaufschlagungsrichtung r, wobei die sich in dem Beaufschlagungsraum 16 befindende Hydraulikflüssigkeit 17 zurück in den Tank 4 verdrängt wird.

Im Zuge dieser Rückverlagerung verringert sich das Volumen des Beaufschlagungsraumes 16. Gleichzeitig vergrößert sich das Volumen der Hydraulikkammer 19.

In die Hydraulikkammer 19 strömt im Zuge der Kolbenrückverlagerung Hydraulikflüssigkeit 17 aus dem Beaufschlagungsraum 16 ein (siehe Pfeil b in Figur 8). Dies kann über die im Bereich der Begrenzungseinrichtung 25 gegebene Undichtigkeit erfolgen.

Bevorzugt ist hierzu ein Rückströmkanal 26 mit einem Füllventil 27 vorgesehen.

Der Rückströmkanal 26 kann, wie auch dargestellt, ein radial gerichteter Stichkanal sein, welcher radial außen im Bereich der Zusammenwirkung zwischen dem Kolben 9, insbesondere dem Kolbenkopf 14, und einer inneren Fläche des Zylinders 8 mündet, beispielsweise im Bereich der Begrenzungseinrichtung 25. Radial innen kann der Rückströmkanal 26 im Bereich einer zentralen Höhlung 28 des Kolbens 9, welche Höhlung 28 Teil des Beaufschlagungsraumes 16 ist, münden.

Der stichkanalartige Rückströmkanal 26 mündet radial außen im Bereich beispielsweise der Begrenzungseinrichtung 25 in einen sich zur Hydraulikkammer 19 öffnenden, im Wesentlichen axial ausgerichteten Strömungsabschnitt 29. Dem Strömungsabschnitt 29 ist in Strömungsrichtung der Hydraulikflüssigkeit 17 bei Rückverlagerung des Kolbens 9 ein gegenüber dem Rückströmkanal 26 erweiterter Bereich 30 vorgelagert. In diesem ist eine Ventilkugel 31 in Strömungsrichtung verlagerbar, zur Freigabe des Durchströmweges für die Hydraulikflüssigkeit 17 bei Rückverlagerung des Kolbens 9.

Bei einer Kolbenverlagerung in Beaufschlagungsrichtung r und entsprechend hierbei gegebenem Überdruck in der Hydraulikkammer 19 ist die Ventilkugel 31 in die Verschlussstellung des Rückströmkanals 26 gedrängt.

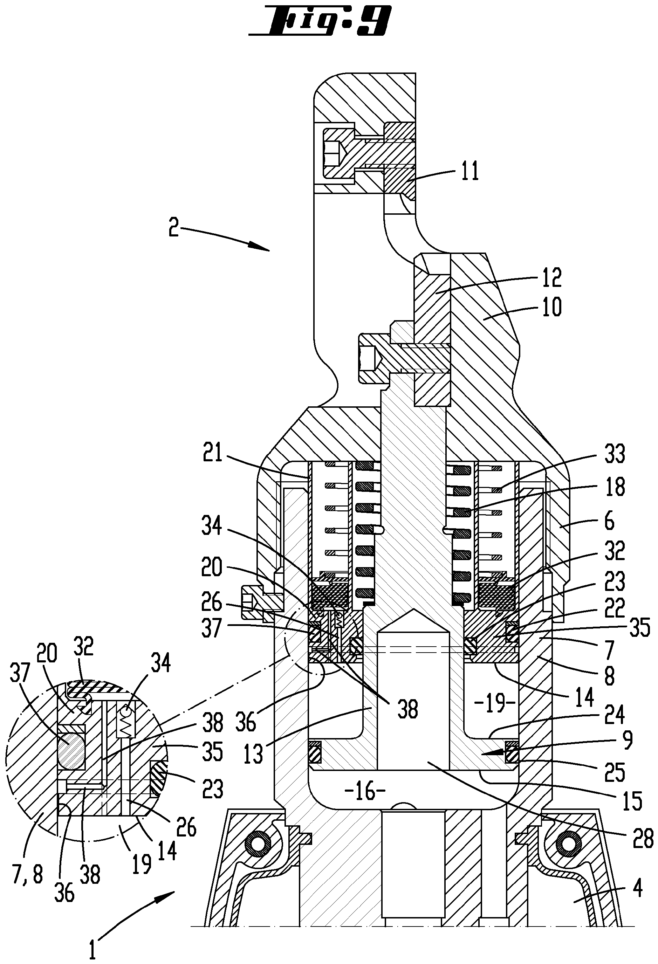

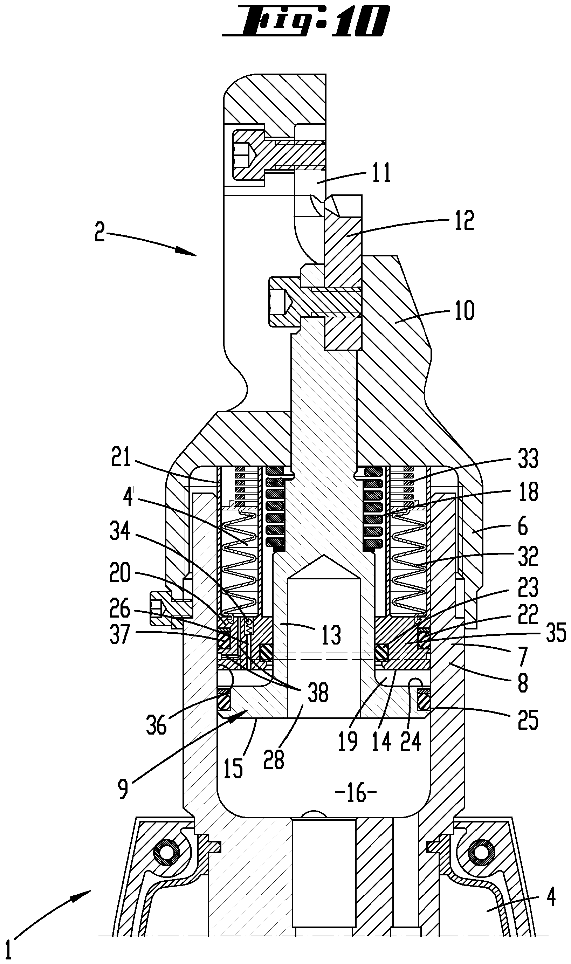

Mit Bezug zu den Figuren 9 und 10 ist eine Ausführungsform dargestellt, bei welcher die in dem Hydraulikraum befindliche Hydraulikflüssigkeit in einen gesonderten Tank 4 entleert wird. Bei einer solchen Ausgestaltung kann in der Hydraulikkammer bis zum Wegfall der Gegenkraft ein geringerer Druck gegeben sein.

Die Begrenzungseinrichtung kann auch bei dieser Ausführungsform grundsätzlich wie vorbeschreiben ausgestaltet sein.

Der gesonderte Tank 4' kann in vielfältiger Hinsicht gestaltet sein. Lediglich beispielhaft ist beim Ausführungsbespiel ein Balg 32 vorgesehen, der im Zuge der Beförderung von Hydraulikflüssigkeit in den gesonderten Tank 4' gegen eine auf diesen wirkende Rückstellfeder 33 ausfahren kann.

Nach Beendigung eines Arbeitsvorganges und entsprechendem Druckabfall in dem Beaufschlagungsraum fährt der Kolben 9 zurück, wobei sich zufolge der Rückstellfeder 33 das in dem gesonderten Tank 4' zuvor aufgenommene Volumen an Hydraulikflüssigkeit wieder in den Beaufschlagungsraum entleert, beim Ausführungsbeispiel über ein Rückschlagventil 34.

Bei dieser Ausführungsform ist der Übergang zu dem gesonderten Tank 4' durch eine in dem Zylinder 8 feststehende Begrenzungswand 35 gegeben. Die Begrenzungseinrichtung 25 kann zwischen einer radialen Seitenfläche 36 der Begrenzungswand 35 und der Innenfläche des Zylinders 8 ausgebildet sein. Wie sich auch aus der Lupendarstellung in Figur 9 ergibt, ist sie bei dem dargestellten Ausführungsbeispiel allein durch eine Undichtigkeit zwischen den zugeordneten Flächen gegeben. Hierdurch strömende Hydraulikflüssigkeit kann sodann in Strömungsrichtung vor einer Radialdichtung 37 in eine Bohrung 38 eintreten, welche den Zugang zu dem gesonderten Tank 34 erbringt.

In der Prinzipdarstellung der Figur 10 ist ersichtlich, dass die Begrenzungseinrichtung auch, ggf. auch nur, durch eine gezielt an einem Umfangsbereich ausgebildete Abflachung 39 des Kolbenkopfes oder der Begrenzungswand ausgebildet sein kann. Es können auch mehrere derartige Abflachungen 39 über den Umfang vorgesehen sein. Hiermit kann gezielt über den Umfang an einer mehreren bestimmten Stellen die Begrenzungseinrichtung ausgebildet sein.

In Figur 10 ist aus Gründen der Darstellbarkeit die Abflachung übertrieben groß dargestellt.

### Liste der Bezugszeichen

- 1: Arbeitswerkzeug
- 2: Arbeitskopf
- 3: Rücklaufventil
- 4: Tank
- 4': gesonderter Tank
- 5: Pumpstößel
- 6: Flansch
- 7: Hals
- 8: Zylinder
- 9: Kolben
- 10: Halter
- 11: Festschneide
- 12: Schneide
- 13: Kolbenschaft
- 14: Kolbenkopf
- 15: Beaufschlagungsfläche
- 16: Beaufschlagungsraum
- 17: Hydraulikflüssigkeit
- 18: Feder
- 19: Hydraulikkammer
- 20: Kragen
- 21: Hülse
- 22: Dichtung
- 23: Dichtung
- 24: Ringfläche
- 25: Begrenzungseinrichtung
- 26: Rückströmkanal
- 27: Füllventil
- 28: Höhlung
- 29: Strömungsabschnitt
- 30: erweiterter Bereich
- 31: Ventilkugel
- 32: Balg
- 33: Rückstellfeder
- 34: Rückschlagventil
- 35: Begrenzungswand
- 36: Seitenfläche
- 37: Radialdichtung
- 38: Bohrung
- 39: Abflachung

- a: Pfeil
- b: Pfeil
- r: Beaufschlagungsrichtung
- x: Achse

## Patentansprüche

1. In einem Zylinder (8) geführter hydraulisch beaufschlagter Kolben (9), wobei der Kolben (9) eine Beaufschlagungsfläche (15) aufweist, die einen zwischen dem Kolben (9) und dem Zylinder (8) gegebenen Beaufschlagungsraum (16) kolbenseitig begrenzt, wobei weiter Hydraulikflüssigkeit (17) zur Bewegung des Kolbens (9) in einer Beaufschlagungsrichtung (r) auf die Beaufschlagungsfläche (15) unter Vergrößerung des Beaufschlagungsraumes (16) einwirken kann, wobei eine mit der Hydraulikflüssigkeit (17) gefüllte Hydraulikkammer (19) ausgebildet ist, die in Bezug auf die Beaufschlagungsfläche (15) über eine in Bezug auf die Beaufschlagungsrichtung (r) rückseitige Fläche auf den Kolben (9) einwirkt, wobei sich ein Volumen der Hydraulikkammer (19) entsprechend der Vergrößerung des Beaufschlagungsraumes (16) verkleinert, unter Verdrängung von Hydraulikflüssigkeit (17) aus der Hydraulikkammer (19) über eine Begrenzungseinrichtung (25), **dadurch gekennzeichnet, dass** die Begrenzungseinrichtung (25) mit einer solchen Drosselwirkung ausgebildet ist, dass sich bei Wegfall eines Gegendruckes auf den Kolben (9) gleichsam eine abgeschlossene Hydraulikkammer (19) ergibt und die Hydraulikflüssigkeit (17) in der Hydraulikkammer (19) durch einen vorschnellenden Kolben (9) hochspannbar ist.

2. In einem Zylinder geführter hydraulisch beaufschlagter Kolben nach Anspruch 1, **dadurch gekennzeichnet, dass** die in der Beaufschlagungsrichtung (r) wirksamen Flächen der Hydraulikkammer (19) und des Beaufschlagungsraumes (16) in ihrem Verhältnis so gewählt sind, dass sich bei einer Bewegung des Kolbens (9) in der Beaufschlagungsrichtung (r) ohne relevanten Gegendruck an dem Kolben in der Hydraulikkammer (19) ein höherer Druck, beispielsweise bis zu einem 5-Fachen höherer Druck, als in dem Beaufschlagungsraum (16) einstellt.

3. In einem Zylinder geführter hydraulisch beaufschlagter Kolben nach einem der vorhergehenden Ansprüche, **dadurch gekennzeichnet, dass** der Beaufschlagungsraum (16) in einer Zusammenwirkung des Kolbens (9) mit einer Innenfläche des Zylinders (8) gebildet ist.

4. Hydraulisches Arbeitswerkzeug (1) mit einem Arbeitskopf (2) und einem in einem Zylinder (8) geführten hydraulisch beaufschlagten Kolben (9) nach einem der Ansprüche 1 bis 3.

## Claims

1. A hydraulically actuated piston (9) guided in a cylinder (8), wherein the piston (9) has an impact surface (15) that borders an impact space (16) on the piston side provided between the piston (9) and cylinder (8), wherein hydraulic fluid (17) can further act on the impact surface (15) by enlarging the impact space (16) in order to move the piston (9) in an impact direction (r), wherein a hydraulic chamber (19) filled with the hydraulic fluid (17) is formed, which acts on the piston (9) in relation to the impact surface (15) by way of a rear surface relative to the impact direction (r), wherein a volume of the hydraulic chamber (19) diminishes based on the enlargement of the impact space (16), forcing hydraulic fluid (17) out of the hydraulic chamber (19) via a limiting device (25), **characterized in that** the limiting device (25) is further designed with a kind of a throttling effect where a quasi-closed hydraulic chamber (19) comes about given the elimination of a counter-pressure on the piston (9), and the hydraulic fluid (17) in the hydraulic chamber (19) can be exposed to a high stress by a piston (9) that shoots out.

2. A hydraulically actuated piston guided in a cylinder according to claim 1, **characterized in that** the selected ratio between the surfaces of the hydraulic chamber (19) and impact space (16) active in the impact direction (r) is such that a higher pressure, for example up to a 5 times higher pressure, arises in the hydraulic chamber (19) than in the impact space (16) while the piston (9) moves in the impact direction (r) without any relevant counter-pressure on the piston.

3. The hydraulically actuated piston guided in a cylinder according to one of the preceding claims, **characterized in that** the piston (9) interacts with an inner surface of the cylinder (8) to form the impact space (16).

4. A hydraulic working tool (1) with a working head (2) and a hydraulically actuated piston (9) guided in a cylinder (8), according to one of the claims 1 to 3.

## Revendications

1. Piston (9) à actionnement hydraulique guidé dans un cylindre (8), le piston (9) présentant une surface d'actionnement (15) qui délimite du côté du piston un espace d'actionnement (16) prévu entre le piston (9) et le cylindre (8), dans lequel en outre un fluide hydraulique (17) pour déplacer le piston (9) dans une direction d'actionnement (r) peut agir sur la surface d'application (15) avec agrandissement de l'espace d'actionnement (16), dans lequel une chambre hydraulique (19) remplie avec du fluide hydraulique (17) est formée qui, par rapport à la surface d'application (15), agit sur le piston (9) via une surface arrière par rapport à la direction d'application (r), dans lequel un volume de la chambre hydraulique (19) se réduit en fonction de l'agrandissement de l'espace d'actionnement (16) avec déplacement de fluide hydraulique (17) de la chambre hydraulique (19) par l'intermédiaire d'un dispositif de limitation (25), **caractérisé en ce que** le dispositif de limitation (25) est conçu avec un effet d'étranglement tel qu'il est réalisé pour ainsi dire une chambre hydraulique étanche (19) lorsqu'une contre-pression sur le piston (9) cesse d'exister et que le fluide hydraulique (17) dans la chambre hydraulique (19) puisse être mis sous pression par un piston (9) qui avance.

2. Piston à actionnement hydraulique guidé dans un cylindre selon la revendication 1, **caractérisé en ce que** les surfaces de la chambre hydraulique (19) et de l'espace d'actionnement (16) qui sont actives dans la direction d'actionnement (r) sont choisies dans leur rapport de manière que s'établisse une pression plus élevée, par exemple jusqu'à cinq fois plus élevée, dans la chambre hydraulique (19) que dans l'espace d'actionnement (16) lorsque le piston (9) se déplace dans la direction d'actionnement (r) sans contre-pression pertinente sur le piston.

3. Piston à actionnement hydraulique guidé dans un cylindre selon l'une des revendications précédentes, **caractérisé en ce que** la chambre d'actionnement (16) est formée par une coopération du piston (9) avec une surface intérieure du cylindre (8).

4. Outil de travail hydraulique (1) avec une tête de travail (2) et un piston (9) à actionnement hydraulique guidé dans un cylindre (8) selon l'une des revendications 1 à 3.
